# FASCICULE DE BREVET EUROPEEN

(11) **EP 3 834 652 B1**
(45) Date de publication et mention de la délivrance du brevet: **22.06.2022**
(21) Numéro de dépôt: 19214649.6
(22) Date de dépôt: 10.12.2019
(51) Int. Cl.: A44C 17/02, A44C 17/04, A44C 27/00

(54) **ENSEMBLE DECORATIF REALISE PAR SERTISSAGE**
DEKORANORDNUNG, DIE DURCH CRIMPEN ERZEUGT WIRD
DECORATIVE ASSEMBLY MADE BY CRIMPING

(43) Date de publication de la demande: 16.06.2021
(73) Titulaire: Comadur S.A., 2400 Le Locle (CH)
(72) Inventeur: LAUPER, M. Stéphane, 2016 Cortaillod (CH); BLASER, M. Lionel, 2035 Corcelles (CH); NETUSCHILL, M. Alexandre, 2414 Le Cerneux-Péquignot (CH)
(74) Mandataire: ICB SA

(56) Documents cités:
- EP-A1- 3 501 326
- FR-A1- 2 662 058
- FR-A1- 2 680 954
- US-A1- 2005 006 566

## Description

### Objet de l'invention

La présente invention concerne un chaton permettant de sertir un élément décoratif dans un ensemble décoratif.

### Arrière-plan technologique

Il est connu dans l'art antérieur des pièces décoratives destinées à être rapportées sur un objet portable tel une montre ou un bijou et dans lesquelles des éléments esthétiques sont sertis sur les parties dudit objet portable faisant office de support.

Pour cela, le support est réalisé en alliage métallique et est usiné pour que des logements apparaissent. Lors de cet usinage, des moyens d'accroche se présentant sous la forme de crochets, plus communément nommés grains ou griffes sont réalisés. Généralement, ces grains sont réalisés avec la matière formant l'objet portable c'est-à-dire de façon monobloc avec l'objet. Lorsqu'un élément esthétique, telle une pierre précieuse, doit être serti, ce dernier est placé dans un logement et les grains sont rabattus à froid par déformation plastique de sorte à maintenir ledit élément esthétique dans le logement. Cette méthode de sertissage est largement répandue pour sertir des pierres précieuses sur des supports en métal car ce dernier présente une capacité de déformation plastique avantageuse. La déformation plastique à froid des métaux cristallins et leurs alliages est possible grâce aux mouvements des dislocations présentes dans les réseaux cristallins. La limite élastique, c'est-à-dire la contrainte au-delà de laquelle un matériau commence à se déformer plastiquement, d'un alliage cristallin dépend des éléments composant ce dernier ainsi que de l'historique thermo-mécanique de l'alliage. Pour le sertissage traditionnel, des alliages ayant des limites élastiques relativement faibles sont généralement choisis afin de faciliter le travail du sertisseur. En plus d'une limite élastique relativement faible, il est nécessaire que l'alliage présente un allongement avant rupture suffisant afin de pouvoir rabattre les grains sans qu'ils cassent. Tout comme pour la limite élastique, cet allongement est la conséquence à la fois des éléments présents dans l'alliage et de l'histoire thermo-mécanique de ce dernier. Par exemple, les alliages d'or utilisés dans l'horlogerie ont une limite élastique de l'ordre de 200-400MPa et un allongement à la rupture de 20-40%. Les aciers inoxydables de type 1.4435 ont une limite élastique de 200-300 MPa et un allongement à la rupture de 25-45%.

Néanmoins, un inconvénient de cette méthode est qu'elle est cantonnée aux supports réalisés en métaux ou alliages métalliques ductiles. Or, de plus en plus de pièces d'horlogerie sont réalisées dans des matériaux ne présentant pas de déformation plastique, souvent durs et/ou fragiles, comme par exemple la céramique, le silicium, le saphir, des alliages intermétalliques ou encore les composites à matrice métallique, naturelle ou polymère.

De ce fait, il n'est plus possible d'utiliser la méthode traditionnelle pour sertir des éléments esthétiques comme par exemple des pierres précieuses.

Cette opération de sertissage est donc généralement remplacée par une opération de collage. Le collage a pour désavantage de ne pas assurer une tenue des pierres à 100% car contrairement au sertissage, cette technique n'implique pas une retenue mécanique des pierres. En effet, les zones collées étant dans la majorité des cas exposées à l'environnement extérieur (humidité, sueur, UV, pollution de l'air, ...), la tenue du collage sur le long terme est rendue difficile. Par conséquent, la tenue des pierres n'est pas assurée ce qui n'est pas acceptable pour des produits de qualité.

Le document brevet EP 2 796 297 décrit une solution à ce problème en utilisant un matériau intermédiaire entre le support indéformable et l'élément décoratif. Dans ce document, une cavité est creusée dans le support, ladite cavité étant ensuite remplie d'un matériau ductile permettant le sertissage de l'élément décoratif. Le remplissage de la cavité nécessite l'utilisation de mode de mise en forme à chaud, tel que la coulée, le formage à chaud, le chassage à chaud ou la densification d'une poudre métallique. Ce type de procédé induit donc des contraintes thermiques complexes à contrôler et un outillage spécifique.

Le document US 9,402,450 décrit un chaton comprenant des griffes non déformables s'insérant dans des gorges ménagées dans une pierre précieuse, la base du chaton s'insérant dans un trou d'une pièce de support. Dans ce document, une déformation plastique de la base du chaton ou de la pièce de support permet de fixer le chaton au support selon un principe similaire à un rivetage. Cette déformation plastique s'accompagne d'un resserrage des griffes, améliorant la stabilité de la fixation. Un inconvénient de ce chaton est que la pierre doit être pré-montée. En outre, ce dispositif est peu adapté à l'insertion dans un matériau fragile, et ne permet pas une imbrication des chatons, les trous de rivetage étant forcément disjoints pour permettre une fixation convenable des éléments. Enfin, un accès au chaton par l'arrière est indispensable pour la fixation définitive dans le support, ce qui rend ce chaton inadapté à des trous borgnes, pourtant indispensable dans le cas par exemple de boitier de montre. Le document FR2680854 décrit un chaton selon le préambule de la revendication 1.

### Résumé de l'invention

Un but de la présente invention est de pallier tout ou partie des inconvénients cités précédemment en fournissant un chaton facile et rapide à mettre en place.

L'invention a également pour but, au moins dans un mode de réalisation particulier, de fournir un chaton pouvant être monté et démonté à volonté sans altérer ses propriétés et sa tenue mécanique dans un support.

A cet effet, l'invention concerne un chaton comprenant un anneau supportant des éléments de sertissage d'un élément décoratif, ce chaton étant agencé pour être placé radialement dans une creusure ménagée dans un substrat d'un article à décorer, ledit chaton comprenant

une gorge circulaire agencée pour recevoir un jonc réalisé en un alliage à mémoire de forme apte à subir une transformation réversible. Selon l'invention, ledit jonc peut passer d'une position rétractée dans laquelle il repose dans ladite gorge, vers une position déployée dans laquelle ledit jonc dépasse au moins partiellement de ladite gorge pour maintenir le chaton dans le substrat.

Conformément à d'autres variantes avantageuses de l'invention :
- la creusure présente une légère conicité, la surface d'une section droite de la creusure augmentant légèrement avec la profondeur et formant une pente, de façon à permettre la déformation du jonc ;
- le jonc se présente sous la forme d'une étoile à huit lobes ;
- le jonc est réalisé en un alliage de nickel et de titan ;
- les éléments de sertissage sont déformables plastiquement de façon à pouvoir sertir l'élément décoratif ;
- le chaton présente une base agencée pour reposer contre le fond de la creusure, la gorge circulaire étant disposé à proximité de la base du chaton.

L'invention concerne également un ensemble décoratif comprenant un chaton, et un article décoré comprenant un ensemble décoratif.

### Description sommaire des dessins

D'autres caractéristiques et avantages de la présente invention ressortiront plus clairement de la description détaillée qui suit d'un exemple de réalisation d'un dispositif de fixation d'un bracelet selon l'invention, cet exemple étant donné à titre purement illustratif et non limitatif seulement, en liaison avec le dessin annexé sur lequel :
- la figure 1 représente un exemple de chaton selon l'invention ;
- la figure 2 représente schématiquement en coupe un chaton de l'invention dans un support ;
- la figure 3 illustre un jonc à mémoire de forme conforme à l'invention ;
- la figure 4 représente un article décoré comprenant un ensemble décoratif comprenant plusieurs chatons ;

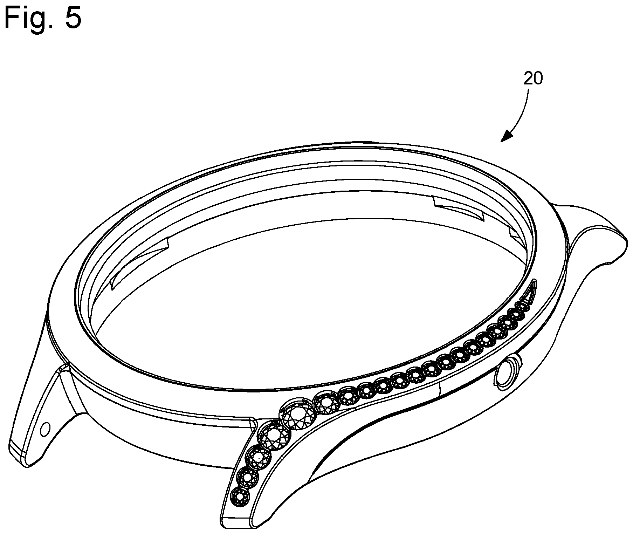

- La figure 5 représente une vue éclatée d'un support, d'un chaton et d'un ensemble décoratif.

### Description détaillée de l'invention

La présente invention concerne un chaton 1 de support d'un élément décoratif tel qu'une pierre précieuse 10 dans un substrat 9 ne permettant pas suffisamment de déformation plastique pour permettre un sertissage traditionnel. Il s'agit généralement de matériaux durs et cassants comme la céramique, le silicium, le saphir, des alliages intermétalliques ou encore des composites à matrice métallique, naturelle ou polymère.

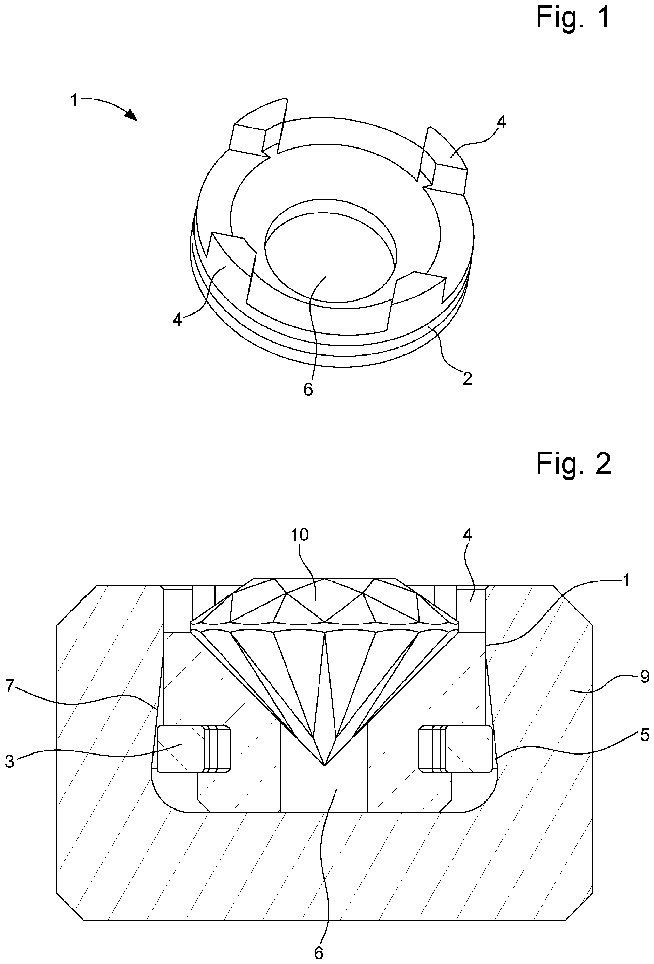

Selon l'invention un chaton 1 intermédiaire est inséré dans une creusure 6 ménagée dans le substrat 9. Tel que représenté aux figures 1 et 2, ce chaton 1 est essentiellement constitué d'un anneau comprenant une gorge circulaire 2 dans laquelle repose un jonc 3 en alliage à mémoire de forme, la gorge circulaire 2 étant disposée à proximité immédiate de la base du chaton 1.

On sait que les alliages à mémoire de forme ont la propriété de pouvoir subir une transformation réversible d'une phase cristallographique haute température dite austénitique à une phase cristallographique basse température dite martensitique et ainsi de pouvoir être éduqués pour prendre dans certaines conditions de températures des configurations correspondant à des états mémorisés. En particulier, si l'on éduque un objet réalisé en un tel alliage pour qu'il mémorise une configuration déterminée dans sa phase austénitique, et que l'on déforme ultérieurement cet objet pendant qu'il est dans sa phase martensitique, il reste dans sa configuration déformée. Si par la suite cet objet est chauffé pour être amené à une température à laquelle il est dans sa phase austénitique, il tend à reprendre sa configuration non déformée, c'est à dire la configuration correspondant à son état mémorisé.

Ainsi, en utilisant ces propriétés, il est possible de réaliser de manière simple la fixation du chaton au moyen d'un jonc en alliage à mémoire de forme. L'utilisation d'un jonc en alliage à mémoire de forme pour fixer le chaton dans une creusure permet d'assembler (serrer) et de désassembler (desserrer) le chaton dans sa creusure un grand nombre de fois sans l'endommager par simple chauffage ou refroidissement du jonc. L'alliage utilisé pour fabriquer le jonc est un alliage de nickel-titane connu sous le nom de Nitinol.

Ainsi lorsque le jonc est chauffé, ce dernier se rétracte et permet l'insertion du chaton 1 dans la creusure 5. Le refroidissement du jonc après l'insertion dans la creusure 5 permet alors une fixation du chaton 1 sans jeu dans le substrat 9.

La partie centrale du chaton 1 comprend une cavité 6 apte à accueillir un élément décoratif 10 tel qu'une pierre précieuse.

La partie supérieure du chaton 1 comprend des éléments de sertissage 4 déformables plastiquement de façon à pouvoir sertir l'élément décoratif 10.

Les parois de la creusure sont de préférence perpendiculaires à la surface du support 9, formant un cylindre droit de section quelconque, le chaton 1 étant maintenu par les forces de frictions engendrées par la pression exercée par le jonc sur les parois de la creusure.

De façon avantageuse, la creusure 5 présente une légère conicité, la surface d'une section droite de la creusure augmentant légèrement avec la profondeur, la creusure présentant alors un paroi légèrement inclinée 7 de façon à augmenter l'espace entre le chaton 1 et la paroi inclinée 7 de la creusure 5 et permettre une déformation plus aisée du jonc 3 et un ancrage mécanique plus efficace du chaton 1.

Le matériau formant le chaton 1 doit être suffisamment ductile pour permettre la déformation plastique nécessaire au sertissage de l'élément décoratif 10. Ce matériau comprend de l'or, du platine, du palladium, du rhénium, du ruthénium, du rhodium, de l'argent, de l'iridium, de l'osmium, ou un alliage comprenant au moins l'un de ces éléments.

Selon l'invention, le jonc 3 est réalisé sous la forme d'une étoile comprenant huit lobes 30. Une telle géométrie permet de garantir une meilleure déformation du jonc 3 par rapport à un jonc de forme annulaire, la section du jonc 3 selon l'invention présentant une section plus faible qu'un jonc annulaire.

Un autre avantage d'une telle géométrie est d'obtenir plusieurs points de contact 31 avec la paroi 7 de la creusure 5, ce qui permet d'exercer plus de force sur une surface plus faible et ainsi garantir un bon maintien.

L'homme du métier n'aura pas de difficulté particulière pour adapter la forme du jonc pour obtenir des effets similaires, il pourra diminuer ou augmenter le nombre de lobes de l'étoile pour obtenir des étoiles à cinq, six ou neuf lobes par exemple.

La figure 2 représente un chaton 1 inséré dans une creusure 5 d'un substrat 9. Le chaton 1 présente une forme cylindrique dont le diamètre inférieur est légèrement plus petit que le diamètre de l'orifice supérieur de la creusure.

Lors de l'étape d'enchâssement du chaton 1 dans la creusure 5, l'utilisateur pousse le chaton dans la creusure, ce qui a pour effet de placer la partie inférieure du chaton sur les bords supérieurs de la creusure.

Le chaton est en place une fois ce dernier poussé au fond de la creusure. Le jonc 3 est ensuite chauffé de manière à ce qu'il reprenne sa forme initiale et vienne se plaquer contre la surface inclinée 7 de la creusure 5. Cette déformation du jonc permet un ancrage mécanique d'excellente qualité.

La figure 2 montre le chaton de la figure 1 où l'on a disposé un élément décoratif 10, cet élément décoratif 10 étant ensuite serti par déformation plastique des éléments de sertissage 4 au moyen d'un outil de sertissage adéquat.

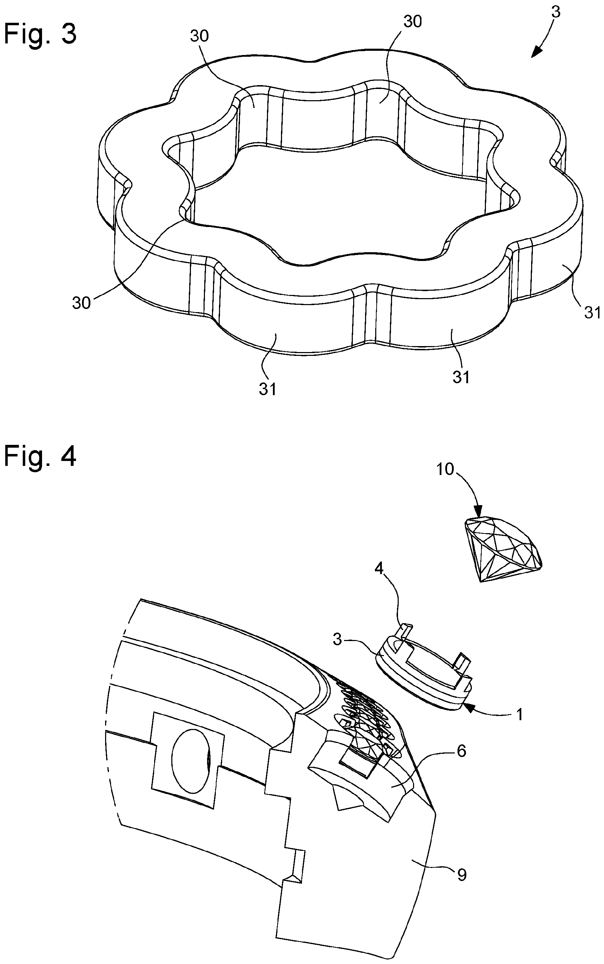

La figure 3 présente une pièce décorative 20 sous la forme d'un boitier de montre comprenant une pluralité de chatons enchâssés dans une pluralité de creusures contiguës.

La creusure 5 du substrat 9 peut être réalisée par tout moyen adéquat, tel que l'usinage, le fraisage, l'ablation laser, voir directement lors du moulage du support. Par exemple, dans le cas d'un support céramique, la creusure peut être obtenue par usinage ou ablation laser de la céramique crue, le support creusé étant ensuite cuit et densifié.

Comme on le voit à la figure 4, le chaton 1 de l'invention est particulièrement bien adapté à la fixation de pierres précieuses dans des trous borgnes et ne nécessite pas d'accès à l'arrière du support lors de la fixation de l'élément décoratif. Cette caractéristique est particulièrement avantageuse lorsque l'élément décoratif est destiné à être inséré dans un dispositif massif ou étanche comme le boitier d'une montre.

## Revendications

1. Chaton (1) comprenant un anneau supportant des éléments de sertissage (4) d'un élément décoratif (10), ce chaton étant agencé pour être placé radialement dans une creusure (5) ménagée dans un substrat (9) d'un article à décorer (21), ledit chaton (1) comprenant une gorge circulaire (1) agencée pour recevoir un jonc (3) réalisé en un alliage à mémoire de forme apte à subir une transformation réversible, **caractérisé en ce que** ledit jonc (3) peut passer d'une position rétractée dans laquelle il repose dans ladite gorge (2), vers une position déployée dans laquelle ledit jonc (3) dépasse au moins partiellement de ladite gorge (2) pour maintenir le chaton (1) dans le substrat (9).

2. Chaton (1) selon la revendication 1, **caractérisé en ce que** la creusure (5) présente une légère conicité, la surface d'une section droite de la creusure augmentant légèrement avec la profondeur et formant une pente (7), de façon à permettre la déformation du jonc (3).

3. Chaton (1) selon la revendication 1 ou 2, **caractérisé en ce que** le jonc (3) se présente sous la forme d'une étoile à huit lobes (30).

4. Chaton (1) l'une des revendications 1 à 3, **caractérisé en ce que** ledit jonc (3) est réalisé en un alliage de nickel et de titane.

5. Chaton (1) selon l'une des revendications 1 à 4, **caractérisé en ce que** les éléments de sertissage (4) sont déformables plastiquement de façon à pouvoir sertir l'élément décoratif (10).

6. Chaton (1) selon l'une des revendications 1 à 5, **caractérisé en ce que** le chaton (1) présente une base agencée pour reposer contre le fond de la creusure (5), la gorge circulaire (2) étant disposé à proximité de la base du chaton.

7. Ensemble décoratif comprenant un chaton selon l'une des revendications 1 à 6, cet ensemble décoratif comprenant en outre un support (9) dans une creusure duquel le chaton est placé radialement.

8. Ensemble décoratif selon la revendication 7, dans lequel la creusure (5) est un trou borgne.

9. Article décoré comprenant un ensemble décoratif selon les revendications 7 ou 8.

## Patentansprüche

1. Fassung (1), umfassend einen Ring zum Halten von Elementen (4) zum Fassen eines dekorativen Elements (10), wobei diese Fassung dazu bestimmt ist, in einer Vertiefung (5), die in ein Substrat (9) eines zu verzierenden Gegenstands (21) eingebracht ist, radial angeordnet zu werden, wobei diese Fassung (1) eine kreisförmige Kehle (2) aufweist, die dafür ausgelegt ist, einen Reif (3) aus einer Legierung mit Formgedächtnis aufzunehmen, das geeignet ist, eine reversible Transformation zu durchlaufen, **dadurch gekennzeichnet, dass** der Reif (3) von einer eingezogenen Position, in der er in der Kehle (2) ruht, in eine ausgefahrene Position übergehen kann, in der der Reif (3) mindestens teilweise aus der Kehle (2) herausragt, um die Fassung (1) in dem Substrat (9) zu halten.

2. Fassung (1) nach Anspruch 1, **dadurch gekennzeichnet, dass** die Vertiefung (5) eine leichte Konizität aufweist, wobei die Mantelfläche eines geraden Abschnitts der Vertiefung mit zunehmender Tiefe eine leichte Zunahme erfährt und eine Schräge (7) bildet, derart, dass der Reif (3) sich verformen kann.

3. Fassung (1) nach Anspruch 1 oder 2, **dadurch gekennzeichnet, dass** der Reif (3) in Form eines achtlappigen Sterns (30) vorliegt.

4. Fassung (1) nach einem der Ansprüche 1 bis 3, **dadurch gekennzeichnet, dass** der Reif (3) aus einer Nickel-Titan-Legierung hergestellt ist.

5. Fassung (1) nach einem der Ansprüche 1 bis 4, **dadurch gekennzeichnet, dass** die Elemente (4) zum Fassen plastisch verformbar sind, so dass sie das dekorative Element (10) einfassen können.

6. Fassung (1) nach einem der Ansprüche 1 bis 5, **dadurch gekennzeichnet, dass** die Fassung (1) eine Basis aufweist, die so angeordnet ist, dass sie auf dem Boden der Vertiefung (5) aufliegt, und die kreisförmige Kehle (2) in der Nähe der Basis der Fassung angeordnet ist.

7. Dekorative Anordnung, umfassend eine Fassung nach einem der Ansprüche 1 bis 6, wobei diese dekorative Anordnung ferner einen Träger (9) umfasst, in dessen Vertiefung die Fassung radial angeordnet ist.

8. Dekorative Anordnung nach Anspruch 7, wobei die Vertiefung (5) ein Sackloch ist.

9. Dekorativer Gegenstand, der eine dekorative Anordnung nach den Ansprüchen 7 oder 8 umfasst.

## Claims

1. Setting (1) comprising a ring carrying elements (4) for setting a decorative element (10), said setting being arranged to be placed radially inside a hollow (5) provided in a substrate (9) of an item to be decorated (21), said setting (1) comprising a circular slot (1) arranged to receive a ring-like element (3) made of a shape memory alloy able to undergo a reversible transformation, **characterized in that** said ring-like element (3) can move from a retracted position, in which it rests in said slot (2), to an open position in which said ring-like element (3) at least partially protrudes from said slot (2) to hold the setting (1) in the substrate (9).

2. Setting (1) according to claim 1, **characterized in that** the hollow (5) has a slight taper, the surface of a cross section of the hollow increasing slightly with depth and forming a slope (7), to allow the deformation of the ring-like element (3).

3. Setting (1) according to claim 1 or 2, **characterized in that** the ring-like element (3) takes the form of a star with eight rounded points (30).

4. Setting (1) according to any of claims 1 to 3, **characterized in that** said ring-like element (3) is made of an alloy of nickel and titanium.

5. Setting (1) according to any of claims 1 to 4, **characterized in that** the setting elements (4) are plastically deformable in order to be able to set the decorative element (10).

6. Setting (1) according to any of claims 1 to 5, **characterized in that** the setting (1) has a base arranged to rest against the bottom of the hollow (5), the circular slot (2) being arranged in proximity to the base of the setting.

7. Decorative assembly comprising a setting according to any of claims 1 to 6, said decorative assembly further comprising a support (9) inside a hollow of which the setting is radially placed.

8. Decorative assembly according to claim 7 wherein the hollow (5) is a blind hole.

9. Decorated item comprising a decorative assembly according to claims 7 or 8.
